# EUROPÄISCHE PATENTANMELDUNG

(11) **EP 1 333 688 A1**
(43) Veröffentlichungstag der Anmeldung: **06.08.2003**
(21) Anmeldenummer: 02002540.9
(22) Anmeldetag: 04.02.2002
(51) Int. Cl.: H04Q 3/00, H04M 3/48, H04M 1/57

(54) **Rückruf zu einer anderen Person als dem rufenden Teilnehmer**

(71) Anmelder: SIEMENS AKTIENGESELLSCHAFT, 80333 München (DE)
(72) Erfinder: Wieser, Stefan, 2120 Wolkersdorf (AT)
(74) Vertreter: Peham, Alois, Dipl.-Ing.

(57) **Zusammenfassung**

Es wird ein Verfahren und eine Vorrichtung zum Aufbau einer Verbindung zwischen einem ersten und einem zweiten Teilnehmer A und B eines Telekommunikationsnetzes TN angegeben, wobei ein Eintrag in einer Liste gespeichert wird, der bei Aktivierung einen Verbindungsaufbau zwischen dem ersten und dem zweiten Teilnehmer A und B auslöst. Eine dafür nötige, dem zweiten Teilnehmer B zugeordnete Adresse wird bei einem dritten Teilnehmer C eingegeben oder ermittelt. Auf diese Weise kann ein Rückrufwunsch für eine andere Person als den rufenden Teilnehmer deponiert, oder eine Rufnummer effizient übermittelt werden.

## Beschreibung

Die Erfindung betrifft ein Verfahren zum Aufbau einer Verbindung zwischen einem ersten und einem zweiten Teilnehmer eines Telekommunikationsnetzes, wobei ein Eintrag in einer Liste gespeichert wird, der bei Aktivierung den Verbindungsaufbau zwischen dem ersten und dem zweiten Teilnehmer auslöst. Weiterhin betrifft die Erfindung eine Vorrichtung zur Durchführung des Verfahrens.

Moderne Telekommunikationsnetze beziehungsweise Telekommunikationsendgeräte bieten eine Vielzahl von Diensten, wobei einer davon die Speicherung eines Eintrag in einer Liste ermöglicht, der bei Aktivierung einen Verbindungsaufbau zwischen einem ersten und einem zweiten Teilnehmer eines Telekommunikationsnetzes auslöst. Grundsätzlich können derartige Listen sowohl im Telekommunikationsnetz als auch im Telekommunikationsendgerät verwaltet werden.

Dieser Dienst ist bei Telekommunikationsnetzen, insbesondere privaten Nebenstellenanlagen, unter dem Begriff "Rückruf" bekannt. Ist ein gewünschter Teilnehmer momentan nicht erreichbar, so kann im Telekommunikationsnetz ein Rückrufwunsch deponiert werden, der am Endgerät des gerufenen Teilnehmers angezeigt wird. Kehrt dieser wieder zurück, so kann die Verbindung zum rufenden Teilnehmer durch einfache Bestätigung des Rückrufwunsches automatisch hergestellt werden.

Bei mobilen Endgeräten ist dieser Dienst im Gegensatz dazu in der Regel in den Geräten selbst integriert, die eine oder mehrere Ruflisten, beispielsweise für entgangene Rufe oder auch angenommene Rufe, umfasst. Hebt der Besitzer eines Endgerätes bei einem ankommenden Gespräch nicht ab, so wird dieses Ereignis in der Liste für entgangene Anrufe dokumentiert. Wählt der gerufene Teilnehmer später einen Eintrag in der Liste aus, so wird automatisch eine Verbindung zum rufenden Teilnehmer aufgebaut. Analog dazu stellt sich der Ablauf für die Liste der angenommenen Rufe dar. Zwingend für den automatischen Gesprächsaufbau ist allerdings die Signalisierung der Rufnummer des rufenden Teilnehmers beim Endgerät des gerufenen Teilnehmers.

Nachteilig an den erwähnten Verfahren ist die mangelnde Flexibilität dieses Dienstes aufgrund der Einschränkung auf rufenden und gerufenen Teilnehmer.

Aufgabe der Erfindung ist es daher, ein Verfahren und eine Vorrichtung anzugeben, welche den Aufbau einer Verbindung zwischen einem ersten und einem zweiten Teilnehmer eines Telekommunikationsnetzes verbessert.

Diese Aufgabe wird erfindungsgemäß mit einem Verfahren der eingangs genannten Art gelöst, bei dem eine dem zweiten Teilnehmer zugeordnete Adresse bei einem dritten Teilnehmer eingegeben oder ermittelt wird.

Mit Hilfe des angegebenen Verfahrens lässt sich die Flexibilität beim Aufbau einer Verbindung wesentlich steigern, beispielsweise weil auf diese Weise ein Rückrufwunsch für eine andere Person als den rufenden Teilnehmer deponiert kann. Darüber hinaus kann das Schalten einer Verbindung erfindungsgemäß auch mittels effizienter Übermittlung einer Rufnummer unterstützt werden. Die vielen Vorteile, die sich durch das erfindungsgemäße Verfahren ergeben, werden nachfolgend im Einzelnen angegeben.

In diesem Zusammenhang wird angemerkt, dass für diese Erfindung als Teilnehmer generell auch das Personal oder ein Automat einer Auskunftsstelle vorgesehen sein kann, vor allem weil eine Auskunftsstelle sich im Bezug auf ihre Adressierung nicht von anderen Teilnehmern in einem Telekommunikationsnetz unterscheidet. Unter dem Begriff Teilnehmerendeinrichtung kann in diesem Zusammenhang daher auch die Auskunftsstelle selbst verstanden werden.

Besonders vorteilhaft ist ein Verfahren,
- bei dem der erste Teilnehmer vom dritten Teilnehmer gerufen wird,
- bei dem die Adresse des zweiten Teilnehmers beim dritten Teilnehmer eingegeben wird und
- bei dem der Eintrag für den Verbindungsaufbau gespeichert wird.

Auf diese Weise kann ein Rückrufwunsch für eine andere Person als den rufenden Teilnehmer deponiert werden, was beispielsweise im Verhältnis Chef/Sekretärin oder Kollege/Kollege einen vereinfachten Arbeitsablauf ermöglicht. Lautet der Auftrag vom zweiten Teilnehmer (Chef) an den dritten Teilnehmer (Sekretärin) etwa: "Verbinden Sie mich mit dem ersten Teilnehmer", so kann der dritte Teilnehmer (Sekretärin) einen entsprechende Rückrufwunsch beim ersten Teilnehmer deponieren, sofern dieser nicht abhebt und sie selbst unmittelbar danach ihren Arbeitsplatz verlässt. Kehrt der erste Teilnehmer zu seinem Telekommunikationsendgerät zurück so kann er durch Aktivierung des auf seinem Telefon angezeigten Rückrufeintrags automatisch eine Verbindung zum zweiten Teilnehmer herstellen. Dieser Eintrag kann dabei sowohl im Telekommunikationsnetz als auch im Telekommunikationsendgerät gespeichert werden.

Günstig ist es auch,
- wenn die Adresse des zweiten Teilnehmers beim dritten Teilnehmer eingegeben wird,
- wenn der erste Teilnehmer vom dritten Teilnehmer gerufen wird, wobei der dritte Teilnehmer als Adresse der rufenden Partei die Adresse des zweiten Teilnehmers und nicht die eigene Adresse übermittelt und
- wenn beim ersten Teilnehmer die Adresse des zweiten Teilnehmers im Eintrag für den Verbindungsaufbau gespeichert wird.

Bei dieser Variante der Erfindung übermittelt der dritte Teilnehmer als Adresse der rufenden Partei die Adresse des zweiten Teilnehmers und nicht die eigene Adresse. Beim ersten Teilnehmer erscheint daher ein fiktiver Anruf des zweiten Teilnehmers, der in Folge in einer entsprechenden Rufliste gespeichert wird. Aktiviert nun der erste Teilnehmer den Eintrag in der Rufliste so wird eine Verbindung zum zweiten und nicht zum dritten Teilnehmer aufgebaut. Die in modernen Telekommunikationsnetzen und Teilnehmerendeinrichtungen vorhanden Mechanismen werden hier also in vorteilhafter Weise eingesetzt, um den Verbindungsaufbau flexibler zu gestalten.

Besonders vorteilhaft ist auch ein Verfahren,
- bei dem der dritte Teilnehmer vom ersten Teilnehmer gerufen wird,
- bei dem die Adresse des zweiten Teilnehmers beim dritten Teilnehmer ermittelt wird und
- bei dem der Eintrag für den Verbindungsaufbau gespeichert wird.

Hier ist der erste Teilnehmer ein Dienstanforderer, der die Hilfestellung des dritten Teilnehmers zur Ermittlung der Adresse des gewünschten Gesprächspartners, hier des zweiten Teilnehmers, anfordert. In Folge wird ein entsprechender Eintrag in einer Rufliste gespeichert, der bei Aktivierung die Verbindung zwischen erstem und zweiten Teilnehmer herstellt. Dieser Eintrag kann dabei sowohl im Telekommunikationsnetz als auch im Telekommunikationsendgerät gespeichert werden.

Besonders vorteilhaft ist es dabei, wenn als dritter Teilnehmer eine Auskunftsstelle vorgesehen wird. Das beschriebene Verfahren eignet sich besonders dort für einen vereinfachten Verbindungsaufbau. Hierbei wird davon ausgegangen, dass der erste Teilnehmer von der Auskunftsstelle die Rufnummer des zweiten Teilnehmers anfordert. In der Regel wird diese Rufnummer mündlich übermittelt, beziehungsweise ist auch eine durch den Operator der Auskunftsstelle hergestellte Verbindung zwischen erstem und zweitem Teilnehmer möglich. Bei der Erfindung wird jedoch ein Eintrag in einer Liste gespeichert, der bei Aktivierung den Verbindungsaufbau zwischen erstem und zweitem Teilnehmer auslöst. Diese Aktivierung kann zu einem beliebigen Zeitpunkt ohne zusätzliche Hilfe eines Operators erfolgen.

Günstig ist es dabei
- wenn der dritte Teilnehmer vom ersten Teilnehmer gerufen wird,
- wenn die Adresse des zweiten Teilnehmers aufgrund einer Anfrage des ersten Teilnehmers beim dritten Teilnehmer ermittelt wird,
- wenn der erste Teilnehmer vom dritten Teilnehmer gerufen wird, wobei der dritte Teilnehmer als Adresse der rufenden Partei die Adresse des zweiten Teilnehmers und nicht die eigene Adresse übermittelt und
- wenn beim ersten Teilnehmer die Adresse des zweiten Teilnehmers im Eintrag für den Verbindungsaufbau gespeichert wird und/oder beim zweiten Teilnehmer die Adresse des ersten Teilnehmers im Eintrag für den Verbindungsaufbau gespeichert wird.

Hier erscheint beim ersten Teilnehmer wiederum ein fiktiver Anruf des zweiten Teilnehmers, der in Folge in einer entsprechenden Rufliste gespeichert wird. Aktiviert nun der erste Teilnehmer den Eintrag in der Rufliste so wird eine Verbindung zum zweiten und nicht zum dritten Teilnehmer aufgebaut. Die in modernen Telekommunikationsnetzen und Teilnehmerendeinrichtungen vorhanden Mechanismen werden hier also in vorteilhafter Weise eingesetzt, um den Verbindungsaufbau flexibler zu gestalten.

Auch bei dieser Variante ist es günstig, wenn als dritter Teilnehmer eine Auskunftsstelle vorgesehen wird. Das beschriebene Verfahren eignet sich zusätzlich zum vereinfachten Verbindungsaufbau besonders zur effizienten Übermittlung einer Rufnummer. Hier wird ebenfalls durch den ersten Teilnehmer die Rufnummer des zweiten Teilnehmers von der Auskunftsstelle angefordert. In Folge wird der erste Teilnehmer von der Auskunftsstelle gerufen, wobei die Auskunftsstelle als Adresse der rufenden Partei die Adresse des zweiten Teilnehmers, nämlich die vom ersten Teilnehmer erfragte Adresse, und nicht die eigene Adresse übermittelt. Beim ersten Teilnehmer erscheint daher ein fiktiver Anruf des zweiten Teilnehmers, der in Folge in einer entsprechenden Rufliste gespeichert wird. Das beschriebene Verfahren eignet sich also zur effizienten Übermittlung einer Teilnehmeradresse von einer Auskunftsstelle zum Dienstanforderer. Aktiviert nun der erste Teilnehmer den Eintrag in der Rufliste so wird eine Verbindung zum zweiten Teilnehmer aufgebaut. Dies kann zu einem beliebigen Zeitpunkt erfolgen.

Eine vorteilhafte Variante der Erfindung ist auch mit einem Verfahren gegeben,
- bei dem eine textbasierte Schnittstelle des dritten Teilnehmers vom ersten Teilnehmer mit Hilfe einer geeigneten Teilnehmerendeinrichtung aufgerufen wird,
- bei dem vom ersten Teilnehmer eine dem zweiten Teilnehmer zugeordnete Identifikation über diese Schnittstelle an den dritten Teilnehmer übermittelt wird,
- bei dem die Adresse des zweiten Teilnehmers anhand dieser Identifikation beim dritten Teilnehmer ermittelt wird,
- bei dem der erste Teilnehmer vom dritten Teilnehmer gerufen wird, wobei der dritte Teilnehmer als Adresse der rufenden Partei die Adresse des zweiten Teilnehmers und nicht die eigene Adresse übermittelt und
- bei dem beim ersten Teilnehmer die Adresse des zweiten Teilnehmers im Eintrag für den Verbindungsaufbau gespeichert wird und/oder beim zweiten Teilnehmer die Adresse des ersten Teilnehmers im Eintrag für den Verbindungsaufbau gespeichert wird.

Für eine solche textbasierte Schnittstelle kann beispielsweise eine Internetseite vorgesehen sein. Dabei kann die Adresse des zweiten Teilnehmers etwa über eine geeignete Eingabemaske an den dritten Teilnehmer, zum Beispiel eine Auskunftsstelle übermittelt werden. Über bekannte Algorithmen wird vom dritten Teilnehmer daraufhin die Adresse des zweiten Teilnehmers ermittelt und durch einen Ruf zum ersten Teilnehmer an diesen weitergeleitet. Dort wird die Adresse in bereits beschriebener Weise gespeichert.

Besonders vorteilhaft ist es dabei, wenn die Adresse des ersten Teilnehmers während eines Initialisierungsvorganges auf seiner Teilnehmerendeinrichtung gespeichert wird und diese Adresse vom dritten Teilnehmer ausgelesen wird, wenn dieser den ersten Teilnehmer ruft.

Von der Auskunftsstelle können dabei sogenannte "Cookies" verwendet werden. Cookies sind vergleichsweise kleine Dateien, die auf den Personal Computern der Teilnehmer gespeichert werden, wenn diese auf bestimmte Internetseiten zugreifen. Eine solche Internetseite kann auch von einer Auskunftsstelle zur Verfügung gestellt werden. Bei Bedarf können diese Cookies wieder von einem Personal Computer wieder ausgelesen werden. Beinhaltet diese Datei beispielsweise die Rufnummer des ersten Teilnehmers so kann auf einfache Weise, das heißt ohne dass der erste Teilnehmer seine eigene Adresse wiederholt angeben muss, eine automatische Verbindung zwischen erstem und drittem Teilnehmer initiiert werden.

Die Aufgabe der Erfindung wird auch mit einer Teilnehmerendeinrichtung gelöst, welche sowohl zur Übertragung einer eigenen Adresse, als auch zur Übertragung einer anderen, zuvor eingegebenen oder ermittelten Adresse als Adresse der rufenden Partei geeignet ist.

Vorteilhaft kann hier eine Teilnehmerendeinrichtung, in diesem Zusammenhang insbesondere eine Auskunftsstelle, dahingehend erweitert werden, dass bei einem ausgehenden Ruf nicht die eigene Adresse signalisiert wird, sondern beispielsweise eine Adresse, die zuvor von einem Teilnehmer erfragt wurde. Auf diese Weise kann eine Adresse eines Teilnehmers sehr effizient an einen Auskunftssuchenden übermittelt werden.

Vorteilhaft kann diese Teilnehmerendeinrichtung aber auch dazu verwendet werden, um einem gerufenen Teilnehmer eine beispielsweise auf einer Eingabeeinheit der Teilnehmerendeinrichtung eingegebene Adresse zu signalisieren und diesen so zum Rückruf eines anderen Teilnehmers veranlassen.

Die Aufgabe der Erfindung wird weiterhin mit einem Telekommunikationsnetz gelöst, welches für die Signalisierung einer einem zweiten Teilnehmer zugeordneten Adresse bei einem Ruf von einem ersten zu einem dritten Teilnehmer als Adresse der rufenden Partei geeignet ist.

Nach dem Stand der Technik wird zur Signalisierung der Adresse der rufenden Partei etwa der Dienst "Calling Line Identification", kurz CLIP, verwendet. Dabei wird die Adresse des rufenden Teilnehmers an den gerufenen Teilnehmer übermittelt und dort je nach verwendeter Teilnehmerendeinrichtung angezeigt. Beim erfindungsgemäßen Verfahren wird davon abweichend jedoch die Adresse eines anderen Teilnehmers signalisiert, nämlich die des zweiten Teilnehmers. Diese kann zuvor eingegeben oder ermittelt worden sein.

Außerdem wird die erfindungsgemäße Aufgabe durch ein Telekommunikationsnetz gelöst,
- welches bei einem Ruf eines ersten Teilnehmers von einem dritten Teilnehmer für die Eingabe einer einem zweiten Teilnehmer zugeordneten Adresse vorgesehen ist und
- welches zur Speicherung eines Eintrags für den Aufbau einer Verbindung zwischen dem ersten und dem zweiten Teilnehmer aufgrund dieser Eingabe geeignet ist

Vorteilhaft kann auf diese Weise beispielsweise der in einem Telekommunikationsnetz in der Regel verfügbare Dienst "Rückruf" dahingehend erweitert werden, dass vom dritten Teilnehmer auch ein Rückrufwunsch für einen zweiten Teilnehmer deponiert werden kann, dessen Adresse vom dritten Teilnehmer eingegeben wird.

Vorteilhaft wird die Aufgabe der Erfindung auch mit einer Auskunftsstelle gelöst,
- welche eine textbasierte Schnittstelle umfasst,
- welche zur Erfassung einer Identifikation eines Teilnehmers geeignet ist,
- welche zur Ermittlung einer diesem Teilnehmer zugeordneten Adresse anhand dieser Identifikation vorgesehen ist und
- welche zur Übertragung dieser Adresse als Adresse der rufenden Partei geeignet ist.

Für eine solche textbasierte Schnittstelle kann beispielsweise eine Internetseite vorgesehen sein. Ein Auskunftssuchender kann sodann diese Schnittstelle nutzen, um bestimmte Daten eines Teilnehmers einzugeben, die geeignet sind dessen Adresse im Telekommunikationsnetz zu ermitteln. Weiterhin umfasst die Auskunftsstelle bei dieser Variante auch Mittel, um die Adresse des gewünschten Teilnehmers im Zuge eines Rufes an den Auskunftssuchenden als Adresse der rufenden Partei zu übertragen, beispielsweise mit Hilfe des Dienstes CLIP.

Günstig ist es dabei, wenn die Auskunftsstelle Mittel zum Auslesen einer einem Teilnehmer zugeordneten Adresse aus einer Teilnehmerendeinrichtung umfasst.

Diese Ausgestaltung erleichtert die Inanspruchnahme eines erfindungsgemäßen Dienstes, da die einem Teilnehmer zugeordnete Adresse aus dessen Teilnehmerendeinrichtung ausgelesen werden kann, und nicht immer wiederkehrend vom Teilnehmer eingegeben werden muss. Die Adresse kann dabei in Form eines sogenannten "Cookies" vorliegen, beispielsweise wenn das Internet als Plattform für die Diensterbringung gewählt wird.

Die Erfindung wird anhand von Ausführungsbeispielen, welche in den Figuren dargestellt sind, näher erläutert. Diese betreffen verschiedene Ausführungsformen erfindungsgemäßer Dienste in einem Telekommunikationsnetz.

Es zeigen:
Figur 1: einen beispielhaften Meldungsablauf bei Inanspruchnahme des erfindungsgemäßen Dienstes "fremder Rückruf";
Figur 2: einen beispielhaften Meldungsablauf bei Inanspruchnahme eines erfindungsgemäßen Dienstes einer Auskunftsstelle;
Figur 3: wie Figur 2, aber bei Wahl einer anderen Option.

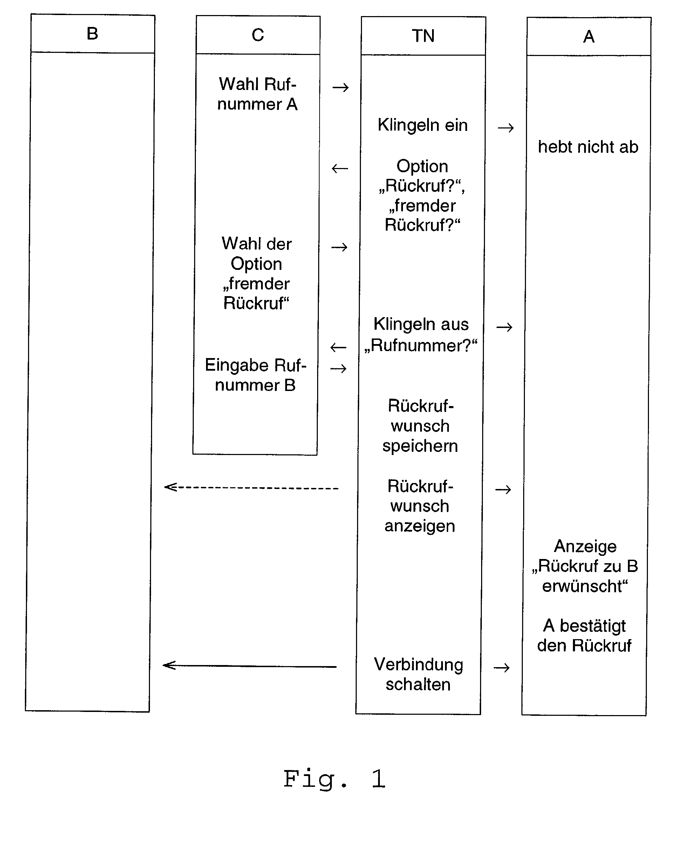

Figur 1 zeigt einen beispielhaften Meldungsablauf bei Inanspruchnahme des erfindungsgemäßen Dienstes "fremder Rückruf". Die Figur umfasst dabei einen ersten Teilnehmer A, einen zweiten Teilnehmer B und einen dritten Teilnehmer C, sowie ein Telekommunikationsnetz TN.

Es wird angenommen, dass der dritte Teilnehmer C an seiner Teilnehmerendeinrichtung die Adresse des ersten Teilnehmers A eingibt und diese somit an das Telekommunikationsnetz TN übermittelt. Dieses veranlasst in Folge den Rufton an der Teilnehmerendeinrichtung des ersten Teilnehmers A. Dieser sei aber momentan nicht verfügbar und hebt deshalb das Telefon nicht ab. Erfindungsgemäß wird dem dritten Teilnehmer C neben dem Dienst "Rückruf" nach dem Stand der Technik auch der erfindungsgemäße Dienst "fremder Rückruf" angeboten, beispielsweise durch eine entsprechende Darstellung auf einer Anzeigeeinheit seiner Teilnehmerendeinrichtung. In Folge wird angenommen, dass der dritte Teilnehmer C die Option "fremder Rückruf" wählt, weil er beispielsweise seinen Platz verlässt und daher eine Verbindung zwischen erstem Teilnehmer A und zweitem Teilnehmer B geschalten werden soll. In Folge wird der Rufton bei der Teilnehmerendeinrichtung des ersten Teilnehmers A vom Telekommunikationsnetz TN wieder ausgeschaltet und der dritte Teilnehmer C zur Eingabe einer Rufnummer aufgefordert. Dieser gibt an seiner Teilnehmerendeinrichtung daraufhin die Adresse des zweiten Teilnehmers B ein und bestätigt den Rückrufwunsch. Dieser wird im Telekommunikationsnetz TN gespeichert und an der Teilnehmerendeinrichtung des ersten Teilnehmers A angezeigt. Optional kann dieser Wunsch auch beim zweiten Teilnehmer B angezeigt werden. Dies ist durch einen strichlierten Pfeil angedeutet. Der erste Teilnehmer A kehre nun zu seinem Platz zurück und bestätige in Folge den Rückrufwunsch. Vom Telekommunikationsnetz TN wird daraufhin eine Gesprächsverbindung zwischen erstem Teilnehmer A und zweitem Teilnehmer B geschalten.

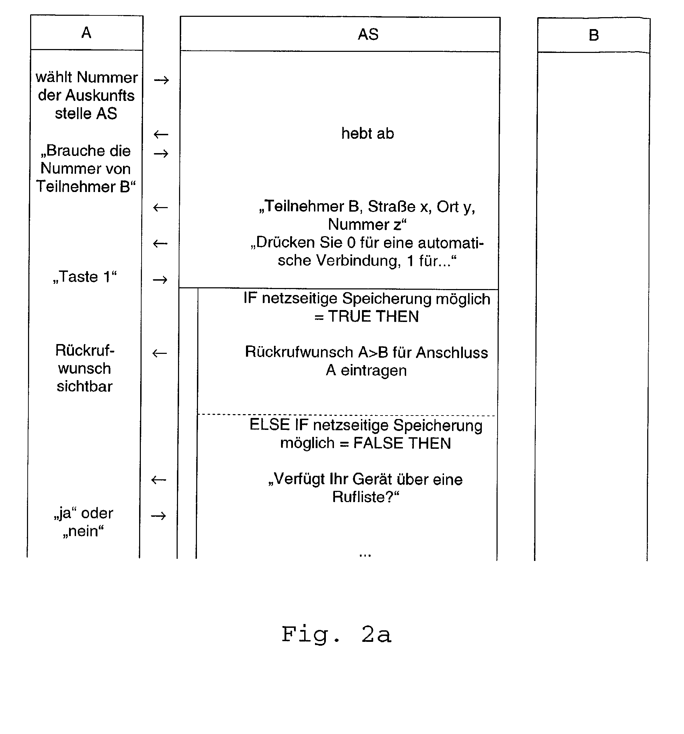

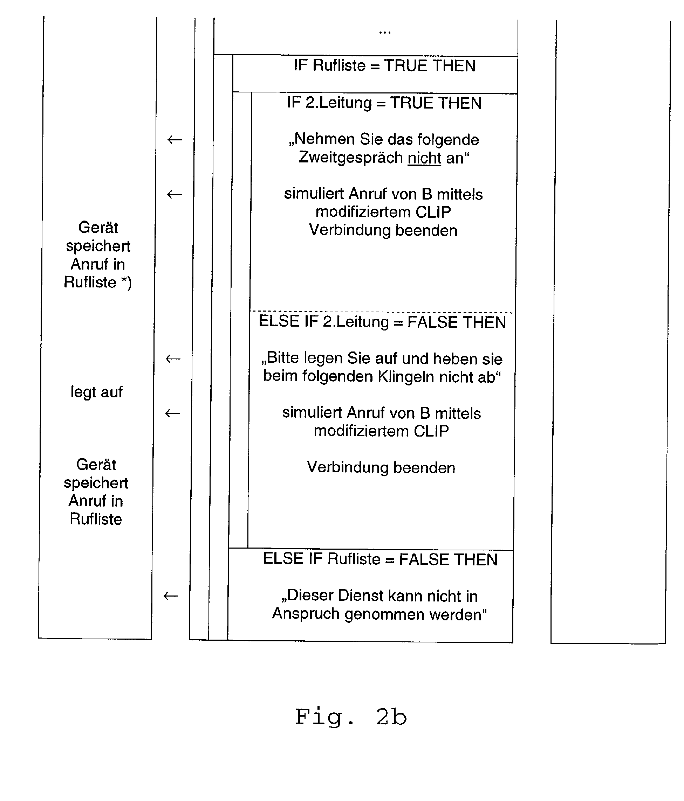

Figur 2 zeigt einen beispielhaften Meldungsablauf bei Inanspruchnahme eines erfindungsgemäßen Dienstes einer Auskunftsstelle. Die Figur umfasst dabei einen ersten Teilnehmer A, einen zweiten Teilnehmer B, sowie eine Auskunftsstelle AS. Die Figur 2b stellt dabei die Fortsetzung von Figur 2a dar.

Es wird angenommen, dass dem ersten Teilnehmer A die Adresse seines gewünschten Gesprächspartners, nämlich des zweiten Teilnehmers B, nicht bekannt ist. Er stellt daraufhin eine Verbindung zur Auskunftsstelle AS her und übermittelt seinen Wunsch, die Adresse des Teilnehmers B zu erhalten.

Es wird darauf hingewiesen, dass zur Abfrage einer Teilnehmeradresse grundsätzlich mehrere Möglichkeiten bestehen. Beispielsweise kann dies mündlich über einen Operator oder einen Sprachautomaten erfolgen, beziehungsweise auch schriftlich etwa über den Short Message Service, mit Hilfe des Wireless Application Protocols oder ähnlichen Diensten. Auch die Verwendung des Hypertext Markup Language ist selbstverständlich denkbar.

In der Auskunftsstelle werden sodann die Daten des zweiten Teilnehmers B ermittelt und dem ersten Teilnehmer A verschieden Optionen zur Wahl gestellt:
0...automatischer Verbindungsaufbau nach dem Stand der Technik
1...Eintragen eines Rückrufwunsches beim ersten Teilnehmer A
2...Eintragen eines Rückrufwunsches beim zweiten Teilnehmer B
3...Eintragen eines Rückrufwunsches beim ersten und zweiten Teilnehmer A und B

Es wird in Folge angenommen, dass sich der erste Teilnehmer A für die Option 1 entscheidet und daher die entsprechende Taste auf seiner Teilnehmerendeinrichtung drückt. Von der Auskunftsstelle AS beziehungsweise mit Hilfe des übergeordneten Telekommunikationsnetzes werden daraufhin einige Abfragen initiiert.

Sofern eine Speicherung dieses Rückrufwunsches im Telekommunikationsnetz möglich ist, wird dieser Weg gewählt. Dies ist beispielsweise in ISDN-Netzen häufig der Fall. Der erste Teilnehmer A kann auf diese Weise zu einem von ihm gewählten Zeitpunkt sehr einfach eine Verbindung zum zweiten Teilnehmer B herstellen. Dies ist sehr vorteilhaft, wenn der zweite Teilnehmer B zum Zeitpunkt der Anfrage an die Auskunftsstelle nicht verfügbar ist, und eine vom Operator der Auskunftsstelle initiierte Gesprächsverbindung zwischen erstem und zweitem Teilnehmer A und B scheitert.

Ist diese Speicherung nicht möglich, so wird eine Anfrage an den ersten Teilnehmer A gerichtet, ob seine Teilnehmerendeinrichtung über eine geräteinterne Rufliste verfügt, so wie dies etwa häufig bei Mobiltelefonen der Fall ist. Trifft dies nicht zu, so kann der erfindungsgemäße Dienst nicht in Anspruch genommen werden. Andernfalls wird jedoch eine weitere Abfrage gestartet.

Verfügt der Anschluss des ersten Teilnehmers A über eine zweite Rufleitung wird dieser aufgefordert das folgende Gespräch nicht anzunehmen. Ob diese Vorgangsweise für die korrekte Funktion des Dienstes zwingend erforderlich ist, hängt von den verwendeten Teilnehmerendeinrichtungen ab. Einige Geräte verfügen nämlich auch über Ruflisten angenommener Gespräche.

Von der Auskunftsstelle AS wird in Folge ein Ruf zum ersten Teilnehmer A initiiert, wobei als Adresse der rufenden Partei jedoch nicht die Adresse der Auskunftsstelle AS, sondern die Adresse des zweiten Teilnehmers B übermittelt wird. Der Gesprächskanal muss für die Funktion des erfindungsgemäßen Verfahrens nicht geschalten werden. Wichtig ist, dass dem ersten Teilnehmer A eine Adresse signalisiert wird. Diese übermittelte Adresse wird sodann von der Teilnehmerendeinrichtung des ersten Teilnehmers A gespeichert und steht diesem somit für den einfachen Aufbau einer Gesprächsverbindung zur Verfügung. Auch eine entsprechende Aufnahme in ein geräteinternes Telefonbuch wird auf diese Weise meist sehr einfach möglich sein.

Steht beim ersten Teilnehmer A eine zweite Leitung nicht zur Verfügung, so wird dieser aufgefordert die momentane Gesprächsverbindung zur Auskunftsstelle AS zu beenden und beim folgenden Rufton das Gespräch nicht anzunehmen. Auch hier hängt es von den verwendeten Teilnehmerendeinrichtungen ab, ob diese Vorgangsweise für die korrekte Funktion des Dienstes zwingend erforderlich ist. Nachdem der erste Teilnehmer A das Gespräch beendet hat, wird von der Auskunftsstelle AS wiederum ein Ruf zum ersten Teilnehmer A initiiert, wobei als Adresse der rufenden Partei jedoch nicht die Adresse der Auskunftsstelle AS, sondern die Adresse des zweiten Teilnehmers B übermittelt wird. Das Speichern der Adresse in der Teilnehmerendeinrichtung des ersten Teilnehmers A erfolgt wieder in der bereits beschriebenen Weise.

Zur Übermittlung der Adresse der rufenden Partei wird nach dem Stand der Technik beispielsweise der Dienst "Calling Line Identification", kurz CLIP, verwendet. Für eine Anwendung im Zuge des erfindungsgemäßen Verfahrens kann dieser entsprechend adaptiert werden.

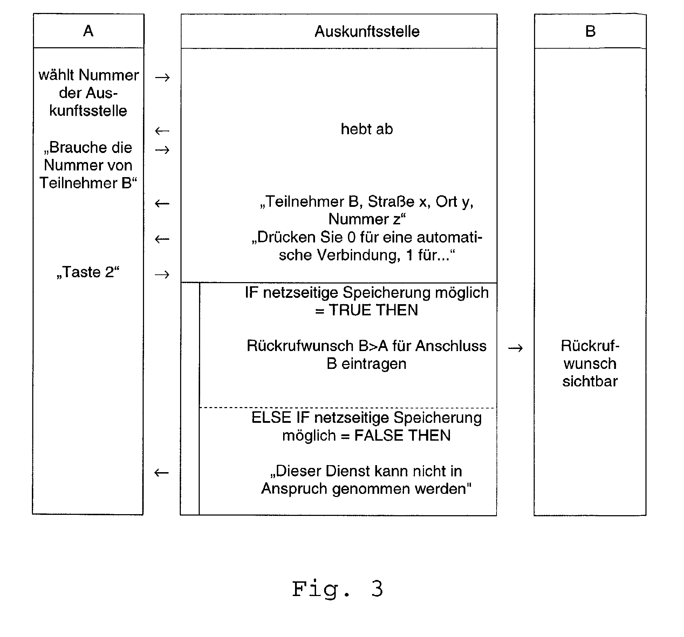

Figur 3 zeigt einen beispielhaften Meldungsablauf bei Inanspruchnahme des oben beschriebenen, erfindungsgemäßen Dienstes, aber bei Wahl der Option 2, "Eintragen eines Rückrufwunsches beim zweiten Teilnehmer B". Die Figur umfasst dabei wieder einen ersten Teilnehmer A, einen zweiten Teilnehmer B, sowie eine Auskunftsstelle AS.

Die Abfrage der Adresse des zweiten Teilnehmers B erfolgt dabei in der bereits beschriebenen Weise. In Folge wird im Telekommunikationsnetz - sofern dies möglich ist - ein Rückrufwunsch für den zweiten Teilnehmer B gespeichert und dies auf dessen Teilnehmerendeinrichtung angezeigt. Ist die Speicherung im Telekommunikationsnetz nicht möglich, so wird dem ersten Teilnehmer A in diesem Beispiel mitgeteilt, dass die Inanspruchnahme dieses Dienstes nicht möglich ist. Denkbar ist aber auch ein davon abweichender Ablauf, bei dem beispielsweise auch die Rufliste in der Teilnehmerendeinrichtung des zweiten Teilnehmers B für die Nutzung des Dienstes herangezogen wird.

Die Inanspruchnahme des erfindungsgemäßen Dienstes gemäß der Option 3, "Eintragen eines Rückrufwunsches beim ersten und zweiten Teilnehmer A und B" ist hier nicht explizit dargestellt, kann aber leicht aus den vorangegangen Ausführen hergeleitet werden.

Dabei werden die Vorteile gemäß Option 1 und 2 in vorteilhafter Weise kombiniert. Einerseits wird der zweite Teilnehmer B über einen Verbindungsversuch informiert, andererseits wird aber auch die Adresse des zweiten Teilnehmers B beim ersten Teilnehmer A gespeichert und steht diesem für einen vereinfachten Verbindungsaufbau zu einem beliebigen Zeitpunkt zur Verfügung.

Es wird angemerkt, dass die Erfindung für eine Vielzahl von Netztechnologien geeignet ist, das heißt sowohl für verbindungsorientierte Netze, wie etwa ISDN-Netze, POTS-Netze, GSM-Netze und so weiter, angewendet werden kann, als auch für paketorientierte Netze, wie zum Beispiel das Internet, verwendet werden kann. Auch eine Kombination beider Technologien ist denkbar. Beispielsweise kann die Anfrage einer Teilnehmeradresse über das Internet erfolgen, die Gesprächsverbindung jedoch über ein klassisches Telekommunikationsnetz geschaltet werden.

## Patentansprüche

1. Verfahren zum Aufbau einer Verbindung zwischen einem ersten und einem zweiten Teilnehmer A und B eines Telekommunikationsnetzes TN, wobei ein Eintrag in einer Liste gespeichert wird, der bei Aktivierung den Verbindungsaufbau zwischen dem ersten und dem zweiten Teilnehmer auslöst,
**dadurch gekennzeichnet,**
**dass** eine dem zweiten Teilnehmer B zugeordnete Adresse bei einem dritten Teilnehmer C eingegeben oder ermittelt wird.

2. Verfahren nach Anspruch 1,
**dadurch gekennzeichnet,**
- **dass** der erste Teilnehmer A vom dritten Teilnehmer C gerufen wird,
- **dass** die Adresse des zweiten Teilnehmers B beim dritten Teilnehmer C eingegeben wird und
- **dass** der Eintrag für den Verbindungsaufbau gespeichert wird.

3. Verfahren nach Anspruch 2,
**dadurch gekennzeichnet,**
- **dass** die Adresse des zweiten Teilnehmers B beim dritten Teilnehmer C eingegeben wird,
- **dass** der erste Teilnehmer A vom dritten Teilnehmer C gerufen wird, wobei der dritte Teilnehmer C als Adresse der rufenden Partei die Adresse des zweiten Teilnehmers B und nicht die eigene Adresse übermittelt und
- **dass** beim ersten Teilnehmer A die Adresse des zweiten Teilnehmers B im Eintrag für den Verbindungsaufbau gespeichert wird.

4. Verfahren nach Anspruch 1,
**dadurch gekennzeichnet,**
- **dass** der dritte Teilnehmer C vom ersten Teilnehmer A gerufen wird,
- **dass** die Adresse des zweiten Teilnehmers B beim dritten Teilnehmer C ermittelt wird und
- **dass** der Eintrag für den Verbindungsaufbau gespeichert wird.

5. Verfahren nach Anspruch 4,
**dadurch gekennzeichnet,**
- **dass** der dritte Teilnehmer C vom ersten Teilnehmer A gerufen wird,
- **dass** die Adresse des zweiten Teilnehmers B aufgrund einer Anfrage des ersten Teilnehmers A beim dritten Teilnehmer C ermittelt wird,
- **dass** der erste Teilnehmer A vom dritten Teilnehmer C gerufen wird, wobei der dritte Teilnehmer C als Adresse der rufenden Partei die Adresse des zweiten Teilnehmers B und nicht die eigene Adresse übermittelt und
- **dass** beim ersten Teilnehmer A die Adresse des zweiten Teilnehmers B im Eintrag für den Verbindungsaufbau gespeichert wird und/oder beim zweiten Teilnehmer B die Adresse des ersten Teilnehmers A im Eintrag für den Verbindungsaufbau gespeichert wird.

6. Verfahren nach Anspruch 1,
**dadurch gekennzeichnet,**
- **dass** eine textbasierte Schnittstelle des dritten Teilnehmers C vom ersten Teilnehmer A mit Hilfe einer geeigneten Teilnehmerendeinrichtung aufgerufen wird,
- **dass** vom ersten Teilnehmer A eine dem zweiten Teilnehmer B zugeordnete Identifikation über diese Schnittstelle an den dritten Teilnehmer C übermittelt wird,
- **dass** die Adresse des zweiten Teilnehmers B anhand dieser Identifikation beim dritten Teilnehmer C ermittelt wird,
- **dass** der erste Teilnehmer A vom dritten Teilnehmer C gerufen wird, wobei der dritte Teilnehmer C als Adresse der rufenden Partei die Adresse des zweiten Teilnehmers B und nicht die eigene Adresse übermittelt und
- **dass** beim ersten Teilnehmer A die Adresse des zweiten Teilnehmers B im Eintrag für den Verbindungsaufbau gespeichert wird und/oder beim zweiten Teilnehmer B die Adresse des ersten Teilnehmers A im Eintrag für den Verbindungsaufbau gespeichert wird.

7. Teilnehmerendeinrichtung,
**dadurch gekennzeichnet,**
**dass** dieses sowohl zur Übertragung einer eigenen Adresse, als auch zur Übertragung einer anderen, zuvor eingegebenen oder ermittelten Adresse als Adresse der rufenden Partei geeignet ist.

8. Telekommunikationsnetz,
**dadurch gekennzeichnet,**
**dass** dieses zur Signalisierung einer einem zweiten Teilnehmer B zugeordneten Adresse bei einem Ruf von einem ersten Teilnehmer A zu einem dritten Teilnehmer C als Adresse der rufenden Partei geeignet ist.

9. Telekommunikationsnetz,
**dadurch gekennzeichnet,**
- **dass** dieses bei einem Ruf eines ersten Teilnehmers A von einem dritten Teilnehmer C für die Eingabe einer einem zweiten Teilnehmer B zugeordneten Adresse vorgesehen ist und
- **dass** dieses zur Speicherung eines Eintrags für den Aufbau einer Verbindung zwischen dem ersten und dem zweiten Teilnehmer A und B aufgrund dieser Eingabe geeignet ist

10. Auskunftsstelle,
- welche eine textbasierte Schnittstelle umfasst,
- welche zur Erfassung einer Identifikation eines Teilnehmers geeignet ist,
- welche zur Ermittlung einer diesem Teilnehmer zugeordneten Adresse anhand dieser Identifikation vorgesehen ist,
**dadurch gekennzeichnet,**
- **dass** diese zur Übertragung dieser Adresse als Adresse der rufenden Partei geeignet ist.
